# EUROPÄISCHE PATENTSCHRIFT

(11) **EP 0 569 901 B1**
(45) Veröffentlichungstag und Bekanntmachung des Hinweises auf die Patenterteilung: **25.09.2002**
(21) Anmeldenummer: 93107537.8
(22) Anmeldetag: 10.05.1993
(51) Int. Cl.: H04Q 3/52, H04Q 11/00, H04L 12/56

(54) **Optische Koppeleinrichtung**
Optical switching device
Dispositif de commutation optique

(30) Priorität: 15.05.1992 DE 4216077
(43) Veröffentlichungstag der Anmeldung: 18.11.1993
(73) Patentinhaber: SIEMENS AKTIENGESELLSCHAFT, 80333 München (DE)
(72) Erfinder: Stein, Karl-Ulrich, Dr., D-8025 Unterhaching (DE)

(56) Entgegenhaltungen:
- EP-A- 0 369 690
- DE-A- 4 315 545
- JOURNAL OF LIGHTWAVE TECHNOLOGY, Bd.LT-5, Nr.1, Januar 1987, NEW YORK US Seiten 154 - 162 R.A. THOMPSON ET AL 'An Experimental Photonic Time-Slot Interchanger Using Optical Fibers as Reentrant Delay-Line Memories'
- IEEE JOURNAL ON SELECTED AREAS IN COMMUNICATION, Bd.6, Nr.7, August 1988, NEW YORK US Seiten 1096 - 1106, XP5849 R.A. THOMPSON 'Architecture with Improved Signal-to-Noise Ratio in Photonic Systems with Fiber-Loop Delay Lines'
- PATENT ABSTRACTS OF JAPAN vol. 7, no. 158 (E-186) (1303) 12. Juli 1983 & JP-A-58 066 495 (NIPPON DENKI K.K.) 20. April 1983
- ELECTRONICS & COMMUNICATIONS IN JAPAN, PART I - COMMUNICATIONS, Bd.74, Nr.6, Juni 1991, NEW YORK US Seiten 24 - 36, XP275278 K. MURAKAMI 'High-Speed TDM Photonic Switching System'

## Beschreibung

Um in einem Lichtwellenleiter-Telekommunikationssystem Umkonfigurationen, insbesondere zum Zwecke eines vermittlungstechnischen Verbindungsaufbaus bzw. -abbaus, aber auch einer Ersatzschaltung oder einer Umrangierung, vorzunehmen, kann man entsprechende Anordnungen elektromechanisch-optischer oder integriert-optischer Schalter vorsehen, wobei die Schalter ggf. nach Maßgabe von Vermittlungsinformationen gesteuert werden können, die in den Headern von in dem Lichtwellenleiter-Telekommunikationssystem übermittelten Nachrichtenzellen enthalten sind.

So ist beispielsweise (aus EP-A2-0 313 389) ein optisches Paketvermittlungssystem mit in Koppelstufen angeordneten optischen 2x2-Koppelschaltern bekannt, bei dem jeder Koppelschalter an seinen zwei Eingängen Pufferspeichereinrichtungen aufweist, die zu dem Eingang eines optischen Umschalters führen, dessen beide Ausgänge die beiden Koppelschalterausgänge bilden, wobei dem optischen Umschalter im Lichtwellenleiterpfad ein optischer Demultiplexer vorgeschaltet ist, durch den aus einem Routing Header nur Licht einer koppelstufenindividuell festgelegten Wellenlänge auskoppelbar ist; von diesem Demultiplexer her wird über einen optoelektrischen Wandler der im Lichtwellenleiterpfad nachfolgende optische Umschalter gesteuert, wobei je nachdem, ob im Routing Header Licht der für die betreffende Koppelstufe festgelegten Wellenlänge enthalten ist oder nicht, der optische Umschalter in seinen einen oder in seinen anderen Schaltzustand gelangt.

Zur Vermeidung von Zellenverlusten ist es dabei bekannt, Zellenspeicher vorzusehen, die aus einer rückgekoppelten Leitung des Koppelfeldes mit einer Verzögerung von mindestens 1 Zellendauer bestehen.

Damit werden bei diesem bekannten Lichtwellenleiter-Telekommunikationssystem sowohl Routing-Funktionen als auch damit verbundene Queueing-Funktionen zur Vermeidung von Zellenverlusten optisch durchgeführt, letztere allerdings beschränkt auf die Einfädelung von Nachrichtenpaketen zweier Eingangsleitungen auf eine gemeinsame weiterführende Leitung.

Das gleiche Queuing-Prinzip kann auch bei einer Koppelmatrix Anwendung finden, bei der Koppelmatrixausgänge über LWL-Verzögerungsleitungen mit abgestuften Laufzeiten gleich der Nachrichtenzellendauer bzw. einem Mehrfachen davon mit Koppelmatrixeingängen verbunden sind.

Desweiteren ist aus der Veröffentlichung "An Experimental Photonic Time-Slot Interchanger Using Optical Fibers as Reentrant Delay-Line Memories", R.A. Thompson et al., Journal of Lightwave Technology, Bd. LT-5, Nr. 1, Januar 1987, New York US, Seiten 154-162 ein optisches Koppelsystem bekannt, dem ein serielles, binäres, optisches Inputsignal zugeführt wird, das als Sequenz von Rahmen strukturiert ist. Jeder Rahmen besteht hierbei aus einem Startbit und einer Sequenz von Wörtern in Zeitschlitzen. Mit Hilfe des optischen Koppelsystems können die Daten des letzten Zeitschlitzes eines Inputrahmens auf den ersten Zeitschlitz eines Outputrahmens vermittelt werden, wobei hierzu der Outputrahmen gegenüber seinem zugehörigen Inputrahmen um einen ganzen Rahmen, d.h. um N Zeitschlitze verzögert wird. Hierdurch ergibt sich eine Verzögerungszeit des optischen Koppelsystems, die der Zeitdauer eines ganzen Rahmens entspricht.

Zusätzlich ist aus der Veröffentlichung "Architectures with Improved Signal-to-Noise Ratio in Photonic Systems with Fiber-Loop Delay Lines", R.A. Thompson et al., IEEE Journal on Selected Areas in Communication, Bd.6, Nr. 7, August 1988, New York US, Seiten 1096-1106 ein Verfahren zur Behandlung von Jittern bekannt, bei dem ein 1024 Daten-Bits umfassender Time-Slot derart formatiert wird, daß dessen Übertragung über eine Leitung 682 ns erfordert, obwohl für die Übertragung der 1024 Daten-Bits lediglich 602 ns erforderlich wären. Die Jitter-Behandlung erfolgt hierbei alleinig durch entsprechende Plazierung der Daten-Bits innerhalb des übergroßen Time-Slots. Jedoch werden weder die Time-Slots selbst, noch diese umfassende Rahmen als Ganzes verzögert.

In den Telekommunikationsnetzen, in denen Nachrichtenzellen weitgehend unsynchronisiert transportiert werden, sind diese unvermeidlich mit einem mehr oder weniger großen Jitter behaftet, und die Erfindung zeigt nun einen Weg, diesen Jitter wieder zu reduzieren.

Die Erfindung betrifft eine optische Koppeleinrichtung mit Rückkopplungs-Speicherschleifen, zur Durchschaltung oder Zwischenspeicherung von optischen Nachrichtenzellen mit Ausgängen und Eingänge aufweisenden optischen Raumkoppelvielfach und einer zur Verzögerung zumindest einiger der Nachrichtenzellen vorgesehenen optischen Laufzeitharfe, die hierzu einen Teil der Ausgänge mit einer entsprechenden Anzahl von Eingängen verbindet, und mit einer Mehrzahl von Lichtwellenleitern abgestufter Laufzeiten, die kleiner als die Dauer einer Nachrichtenzelle sind, gebildet ist. Zusätzlich kann die Laufzeitharfe auch mit Lichtwellenleitern gebildet sein, die ein Queueing zur Vermeidung von Zellenverlusten bei auf belegte Koppelanordnungsausgänge treffenden Nachrichtenzellen ermöglichende, vorzugsweise linear oder auch logarithmisch gestufte Laufzeiten gleich einem ganzzahligen n-fachen (mit n ≥ 1) der Dauer einer Nachrichtenzelle aufweisen.

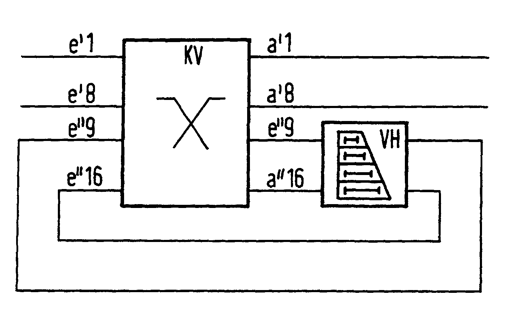

Anhand der Zeichnung wird die Erfindung noch näher erläutert.

In der Zeichnung ist in zum Verständnis erforderlichem Umfange eine Rückkopplungs-Speicherschleifen aufweisende optische Koppelanordnung zur Durchschaltung oder Zwischenspeicherung von optischen Nachrichtenzellen dargestellt. Diese Koppelanordnung ist mit einem optischen Raumkoppelvielfach KV gebildet, das Eingänge e'1 ... e''16 und Ausgänge a'1 ... a"16 aufweist, wobei jeweils ein Teil der Eingänge des Raumkoppelvielfachs KV Eingänge e'1 ... e'8 der Koppelanordnung darstellt und wobei jeweils ein Teil der Ausgänge des Raumkoppelvielfachs KV Ausgänge a'1 ... a'8 der optischen Koppelanordnung bildet. Ein anderer Teil der Ausgänge des optischen Raumkoppelvielfachs KV, nämlich die Ausgänge a"9 ... a"16, ist mit einer entsprechenden Anzahl von Eingängen e"9 ... e"16 des optischen Raumkoppelvielfachs KV verbunden, und zwar über eine mit einer Mehrzahl von Lichtwellenleitern abgestufter Laufzeiten gebildete optische Laufzeitharfe VH.
Dabei ist die Laufzeitharfe mit Lichtwellenleitern gebildet, deren abgestufte Laufzeiten kleiner als die Dauer einer Nachrichtenzelle sind; dies ermöglicht es, einem mehr oder weniger großen Jitter von unsynchronisiert auftretenden Nachrichtenzellen durch eine entsprechende Phasenverschiebung, d.h. Korrektur ihrer Phasenlage, zu begegnen. Zusätzlich kann die Laufzeitharfe auch mit Lichtwellenleitern gebildet sein, die abgestufte Laufzeiten gleich einem ganzzahligen n-fachen (mit n ≥ 1) der Dauer einer Nachrichtenzelle aufweisen; diese Laufzeiten, die ein Queueing zur Vermeidung von Zellenverlusten bei auf belegte Koppelanordnungsausgänge treffenden Nachrichtenzellen ermöglichen, sind vorzugsweise linear oder auch logarithmisch gestuft. Diese Stufung ist zweckmäßigerweise so optimiert, daß mit einer bestimmtene Anzahl von Zellenspeichern ein Minimum an Zellenverlusten für eine gegebene Konfiguration des Lichtwellenleiter-Telekommunikationssystems erreicht wird.

In der in der Zeichnung skizzierten optischen Koppelanordnung können an den Eingängen e'1 ... e'8 auftretende optische Nachrichtenzellen, die jeweils zu einem der Ausgänge a'1 .. .. a'8 hin durchzuschalten sind, jeweils bei richtiger Phasenlage der Nachrichtenzelle und freiem Ausgang a' direkt zu dem betreffenden Koppelanordnungsausgang a' hin durchgeschaltet werden.
Tritt die betreffende Nachrichtenzelle dagegen jitterbedingt zu früh auf u./o. ist der angezielte Ausgang a' gerade belegt, so wird die betreffende Nachrichtenzelle zunächst um eine entsprechende Zeitspanne - oder zunächst auch nur einen Teil davon - verzögert. Hierzu wird der betreffende Koppelanordnungseingang e' zu einem solchen Koppelanordnungsausgang a" hin durchgeschaltet, der über einen eine entsprechende Laufzeit aufweisenden Lichtwellenleiter der Laufzeitharfe VH mit einem Eingang e" der Koppelanordnung KV verbunden ist. Um diese (ggf. Teil-)Laufzeit verzögert tritt damit die betreffende Nachrichtenzelle erneut an einem Eingang der Koppelanordnung KA auf, nämlich an einem Eingang e", von wo aus die Nachrichtenzelle ggf. zu einem solchen Koppelanordnungsausgang a" hin durchgeschaltet wird, der über einen eine einem weiteren Teil der insgesamt erforderlichen Verzögerungszeitspanne entsprechende Laufzeit aufweisenden Lichtwellenleiter der Laufzeitharfe VH mit einem Eingang e" der Koppelanordnung verbunden ist. Diese Vorgänge können sich ggf. für weitere Teilzeiten der insgesamt erforderlichen Verzögerungszeitspanne wiederholen, bis schließlich die betreffende Nachrichtenzelle von einem Eingang e" der Koppelanordnung aus zu dem angezielten Ausgang a' nunmehr in richtiger Phasenlage und bei freiem Ausgang a'durchgeschaltet wird.

## Patentansprüche

1. Optische Koppeleinrichtung mit Rückkopplungs-Speicherschleifen, zur Durchschaltung oder Zwischenspeicherung von optischen Nachrichtenzellen, mit
- einem Ausgänge (a', a") und Eingänge (e") aufweisenden optischen Raumkoppelvielfach (KV) und
- einer zur Verzögerung zumindest einiger der Nachrichtenzellen vorgesehenen optischen Laufzeitharfe (VH), die hierzu
- einen Teil (a") der Ausgänge (a', a") mit einer entsprechenden Anzahl von Eingängen (e") verbindet, und
- mit einer Mehrzahl von Lichtwellenleitern abgestufter Laufzeiten, die kleiner als die Dauer einer Nachrichtenzelle sind, gebildet ist.

2. Optische Koppeleinrichtung nach Anspruch 1,
**dadurch gekennzeichnet,**
**daß** die Laufzeitharfe (VH) zusätzlich eine Mehrzahl von Lichtwellenleitern linear abgestufter Laufzeiten von ganzzahligen n-fachen, mit n ≥ 1, der Nachrichtenzellendauer aufweist.

3. Optische Koppeleinrichtung nach Anspruch 1,
**dadurch gekennzeichnet,**
**daß** die Laufzeitharfe (VH) zusätzlich eine Mehrzahl von Lichtwellenleitern logarithmisch abgestufter Laufzeiten von ganzzahligen n-fachen, mit n ≥ 1, der Nachrichtenzellendauer aufweist.

## Claims

1. Optical coupling device with feedback memory loops for switching through or buffering optical message cells, having
- an optical space switching matrix (KV) with outputs (a', a'') in inputs (e"), and
- an optical transit time harp (VH), which is provided for delaying at least some of the message cells, and, for this purpose,
- connects a portion (a") of the outputs (a', a") to a corresponding number of inputs (e"), and
- is formed with the aid of a plurality of optical conductors of graded transit times which are shorter than the duration of a message cell.

2. Optical coupling device according to Claim 1, **characterized in that** the transit time harp (VH) additionally has a plurality of optical conductors of linearly graded transit times which are an integral n-fold, with n ≥ 1, multiple of the message cell duration.

3. Optical coupling device according to Claim 1, **characterized in that** the transit time harp (VH) additionally has a plurality of optical conductors of logarithmically graded transit times of integral n-fold, with n ≥ 1, multiples of the message cell duration.

## Revendications

1. Dispositif de commutation optique à boucles de mémoire à rétroaction pour la commutation ou le stockage provisoire de cellules d'informations optiques, comprenant
- un autocommutateur spatial optique (KV) doté de sorties (a', a") et d'entrées (e") et
- un circuit de retard en forme de harpe optique (VH) prévue pour retarder au moins quelques-unes des cellules d'informations et qui à cet effet
- relie une partie (a") des sorties (a', a") à un nombre correspondant d'entrées (e") et
- est formé par une pluralité de fibres optiques de temps de propagation échelonnés inférieurs à la durée d'une cellule d'informations.

2. Dispositif de commutation optique selon la revendication 1, **caractérisé en ce que** un circuit de retard en forme de harpe (VH) comprend en outre une pluralité de fibres optiques de temps de propagation échelonnés linéairement correspondant à des nièmes multiples entiers, avec n ≥ 1, de la durée d'une cellule d'informations.

3. Dispositif de commutation optique selon la revendication 1, **caractérisé en ce que** un circuit de retard en forme de harpe (VH) comprend en outre une pluralité de fibres optiques de temps de propagation échelonnés logarithmiquement correspondant à des nièmes multiples entiers, avec n ≥ 1, de la durée d'une cellule d'informations.
